# EUROPÄISCHE PATENTSCHRIFT

(11) **EP 1 363 816 B1**
(45) Veröffentlichungstag und Bekanntmachung des Hinweises auf die Patenterteilung: **16.11.2005**
(21) Anmeldenummer: 01995547.5
(22) Anmeldetag: 28.11.2001
(51) Int. Cl.: B60S 1/32, B60S 1/38, B60S 1/00

(54) **WISCHARM MIT EINEM GELENKIG VERBUNDENEN WISCHBLATT**
WIPER ARM WITH A PIVOTING CONNECTED WIPER BLADE
BRAS D'ESSUIE-GLACE POURVU D'UNE RACLETTE RELIEE DE MANIERE ARTICULEE

(30) Priorität: 30.01.2001 DE 10103889
(43) Veröffentlichungstag der Anmeldung: 26.11.2003
(73) Patentinhaber: ROBERT BOSCH GMBH, 70442 Stuttgart (DE)
(72) Erfinder: ZIMMER, Joachim, 77880 Sasbach (DE); RAPP, Harald, 77815 Buehl (DE)
(86) Internationale Anmeldenummer: PCT/DE2001/004474
(87) Internationale Veröffentlichungsnummer: WO 2002/060730

(56) Entgegenhaltungen:
- DE-A- 3 431 936
- DE-A- 3 744 237
- DE-A- 3 829 343
- DE-A- 4 406 131
- DE-A- 19 647 347
- DE-A- 19 731 683

## Beschreibung

### Stand der Technik

Die Erfindung geht von einer Einrichtung zum seitlichen Führen eines Wischblatts nach dem Oberbegriff des Anspruchs 1 aus.

Bekannte Scheibenwischer besitzen einen Wischarm, der aus einem Befestigungsteil und einem damit gelenkig verbundenen Gelenkteil mit einer Wischstange aufgebaut ist. Mit dem Wischarm ist ein Wischblatt gelenkig verbunden, das aus einem Tragbügelsystem mit einem Mittelbügel und gegebenenfalls mit untergeordneten Bügeln aufgebaut ist, z.B. einem Zwischenbügel und/oder Krallenbügeln, die eine Wischleiste halten. Die Bügel sind mit den untergeordneten Bügeln ebenfalls gelenkig verbunden, sodass sich die Wischleiste während der Schwenkbewegung einer Wölbung der Fahrzeugscheibe anpassen kann. Die Gelenke zwischen den Bügeln werden in der Regel durch Kunststoffteile gebildet, die gleichzeitig die Stirnseite des Profils des übergeordneten Bügels abdecken.

Aus der DE A1 197 38 232 ist ferner ein Tragelement aus einem elastischen, hochfesten Kunststoff für eine Wischleiste bekannt, das im unbelasteten Zustand eine Krümmung aufweist, die so ausgelegt ist, dass sich ein gleichmäßiger Anpressdruck ergibt, wenn sich im Betrieb des Wischblatts die Wischleiste vollständig an die Fahrzeugscheibe anlegt. An den Stirnseiten werden als Abschluss des Profils Kappen aus Kunststoff montiert. Es sind ferner ähnliche Wischblätter mit einem Tragelement aus Federstahl bekannt.

Auf Grund großer Geschwindigkeitsunterschiede zwischen dem antriebsseitigen, inneren Bereich und dem äußeren Bereich des Wischblatts sowie von Stick-Slipeffekten wird das Wischblatt zum Schwingen angeregt. Dies führt insbesondere am Innenkreis des Wischblatts, wo besonders kleine Reibgeschwindigkeiten vorherrschen, zu unerwünschten seitlichen Bewegungen, die ab einer bestimmten Größe dazu führen können, dass das Wischblatt am Wischarm anschlägt und Klappergeräusche verursacht. Dies ist besonders kritisch, wenn die Fahrzeugscheiben verschmutzt, vereist oder nicht ausreichend feucht sind oder Schnee auf der Fahrzeugscheibe liegt. Da das Wischblatt dabei den Kontakt zur Fahrzeugscheibe kurzfristig verlieren kann, ist außerdem das Wischbild unbefriedigend. Das Wischblatt neigt umso eher zum Rattern, je länger es ist und je mehr Bügelteile es aufweist. Ferner verhalten sich leichte Wischblätter mit einer geringen Federsteifigkeit ungünstiger als andere.

Es ist ferner aus der DE 37 44 237 A1 ein Scheibenwischer bekannt, der zwischen einem Wischarm und einem Krallenbügel eine Einrichtung zum Führen eines Wischblatts aufweist, der auf der einer Antriebswelle zugewandten Seite des Wischblatts angeordnet ist. Die Einrichtung ist am Wischarm befestigt und führt mit mindestens einer Führungswange das Wischblatt im Bereich eines Gelenks zwischen einem Mittelbügel und einem Krallenbügel. Dabei müssen die Wangen so lang sein, dass sie in allen Positionen das Wischblatt sicher führen. Je nach Krümmung der Fahrzeugscheibe und der Kinematik des Scheibenwischers besteht die Gefahr, dass lange Wangen in einigen Positionen mit der Fahrzeugscheibe kollidieren. Einen Kompromiss zu finden, ist schwierig, wenn die Scheibenwischer für verschiedene Fahrzeugscheiben mit sehr unterschiedlichen Krümmungen geeignet sein sollen.

Aus der DE 197 31 683 A1 ist ferner eine Einrichtung zum Führen des Wischblatts bekannt, die ein erstes und ein zweites Teil aufweist. Sie ist im Bereich der Anlenkstelle des Krallenbügels angeordnet und mit dem Gelenkteil des Wischarms fest verbunden, z.B. durch Kleben, Schweißen, Löten, Klipsen, Klemmen usw. Das erste Teil der Einrichtung besitzt Führungswangen, welche die Gelenkstelle des Krallenbügels umgreifen und in Bezug auf den Wischarm führen. Auch das zweite Teil weist Führungswangen auf, zwischen denen das erste Teil teleskopartig geführt ist, so dass dessen Führungswangen kurz gehalten werden können und eine Kollision mit der Fahrzeugscheibe auch bei starken Wölbungen der Fahrzeugscheibe nicht zu befürchten ist. Das erste Teil ist zweckmäßigerweise verliersicher mit der Einrichtung verbunden, z.B. durch ein nachgiebiges Element.

Das zweite Teil kann auch aus einer Federzunge bestehen, die das erste Teil mit der Einrichtung in der Weise verbindet, dass das erste Teil in Bewegungsrichtung des Scheibenwischers starr geführt ist, während es senkrecht zur Fahrzeugscheibe gegenüber dem Wischarm nachgeben kann. Es ist natürlich auch möglich, als zweites Teil eine Kombination zwischen einer Federzunge und Führungswangen zu wählen, wobei die Federzunge dann die Funktion des nachgiebigen Elements übernimmt. Ferner kann die Einrichtung aus einzelnen Blechteilen hergestellt und zusammengesetzt sein, bevorzugt ist sie jedoch ein Kunststoffspritzteil aus einem geeigneten Kunststoff. In jedem Fall werden aber zum Führen des Wischblatts zusätzliche Bauteile benötigt, wodurch ein erhöhter Fertigungs- und Montageaufwand und zusätzliche Materialkosten entstehen.

Aus der DE 44 06 131 A1 ist ein Wischblatt bekannt, das eine Einrichtung zum seitlichen Führen gegenüber einem Wischarm aufweist. Die Einrichtung besteht aus einem Führungsteil, das bei üblichen Wischblättern zwischen einem Ende des Mittelbügels und einem mittleren Abstützbereich eines Krallenbügels vorgesehen ist. Das Führungsteil besitzt zum Wischarm hin eine offene Kulisse, in die ein mit dem Führungsarm fest verbundener Führungsabschnitt in Längsrichtung des Wischarms verschiebbar eingreift. Die Einrichtung lässt Relativbewegungen zwischen dem Wischblatt und dem Wischarm in Längsrichtung des Wischblatts und in Anpressrichtung des Wischarms zu, während sie Kräfte in Richtung der Wischbewegung überträgt.

### Vorteile der Erfindung

Nach der Erfindung ist der zweite Teil der Einrichtung, der dem Wischblatt zugeordnet ist, mit diesem fest verbunden, indem er an einer Kappe der Wischleiste (26) angeformt ist und der federnde Lenker oberhalb, seitlich oder in der Verlängerung des Wischblatts verläuft. Der erste Teil der Einrichtung, der dem Wischarm zugeordnet ist, kann ebenfalls mit diesem fest verbunden sein, wobei die erforderlichen Relativbewegungen zwischen dem Wischarm und dem Wischblatt von dem federnden Lenker weit gehend zwangfrei aufgenommen werden können, sodass sich durch die Einrichtung weder die Auflagekraft des Wischblatts noch seine Anstellung zur Fahrzeugscheibe ändert.

Der erste Teil der Einrichtung kann auch mit Führungsflächen am Wischarm anliegen, die eine Bewegung in Längsrichtung des Wischarms und senkrecht zu Fahrzeugscheibe zulassen, das Wischblatt aber seitlich, in Wischrichtung führen, so-dass die Einrichtung außer der seitlichen Führung keinen Zwang auf das Wischblatt ausübt. Da die Führungsflächen auf der von der Fahrzeugscheibe abgewandten Seite der Einrichtung liegen und der der Fahrzeugscheibe zugewandte Teil der Einrichtung am Wischblatt fixiert ist, ist jede Kollision mit der Fahrzeugscheibe ausgeschlossen. Durch die seitliche Führung des Wischblatts werden Seitenbewegungen des Wischblatts eingeschränkt und ein Rattern oder Klappern des Wischblatts vermieden. Zweckmäßigerweise weisen die Führungsflächen in Hubrichtung verlaufende Rippen auf. Dadurch verringern sich die Kontaktflächen, wodurch die Reibung verringert und ein Verklemmen der Führung vermieden wird.

Die Einrichtung ist vorzugsweise als Kunststoffteil ausgeführt. Nach der Erfindung wird der fest mit dem Wischblatt verbundene Teil an einer Kappe einer Wischleiste angeformt, wodurch keine zusätzliche Montage anfällt und die Fertigungskosten gering gehalten werden. Dieser Teil ist über einen Lenker mit einem ersten Teil der Einrichtung verbunden, welcher eine oder mehrere Führungsflächen aufweist. Die Führungsflächen liegen seitlich am Wischarm an oder greifen in ein Führungsprofil des Wischarms ein, z.B. einen Schlitz.

Zweckmäßigerweise ist der Lenker als federndes Element ausgeführt, beispielsweise als Blattfeder, so dass Höhenbewegungen zwischen dem Wischblatt und dem Wischarm ausgeglichen werden, die auf Grund des kinematischen Ablaufs während des Wischbetriebs entstehen. Die Federkraft der Blattfeder ist dabei so gewählt, dass die Auflagekraft des Wischblatts nicht verändert wird, um einen optimales Wischergebnis zu erhalten und einen übermäßigen Verschleiß des Wischgummis zu verhindern. Bei entsprechender Auslegung der Blattfeder kann der erste, dem Wischarm zugeordnete Teil mit diesem fest verbunden werden. Diese Lösung kommt immer dann in Frage, wenn die Relativbewegungen zwischen dem Wischblatt und dem Wischarm in Längsrichtung und/oder in Richtung senkrecht zur Fahrzeugscheibe nicht sehr groß sind.

Die erfindungsgemäße Einrichtung zum Führen des Wischblatts löst die im Stand der Technik angesprochenen Probleme auf einfache Weise und ohne Einsatz zusätzlicher Bauteile, so dass kein erhöhter Montageaufwand entsteht. Ein weiterer Vorteil dieser Wischblattführung besteht darin, dass diese Einrichtung zu einem großen Teil vom Wischarm verdeckt wird, keinen zusätzlichen Einbauraum beansprucht und zudem noch eine kompakte Gestaltung des Scheibenwischers im Wischarm- und Wischblattbereich ermöglicht. Ein kompakter Scheibenwischer verursacht weniger Windgeräusche und besitzt ein besseres Design.

Um die seitliche Führung des Wischblatts zu verbessern besitzt der Wischarm in einer Ausgestaltung der Erfindung im Bereich der Führungsflächen Vorsprünge, die in Hubrichtung der Höhenbewegung weisen. Die Vorsprünge können je nach Bedarf ein unterschiedliches Profil aufweisen, so dass verschieden große Seitenkräfte aufgenommen und unterschiedliche Platzverhältnisse berücksichtigt werden können. Außerdem verbessert eine formschlüssige Verbindung die Führung zusätzlich.

Die Wischblattführung gemäß der Erfindung ist auch für sehr flach bauende Wischblätter, beispielsweise gelenkfreie Wischblattarten, geeignet. Der zweite Teil ist als Endkappe ausgebildet, welche die Wischleiste und das Tragelement am Ende umgreift und fest mit diesem verbunden ist. Je nach Anwendungsfall kann die Blattfeder oberhalb, seitlich oder in Verlängerung des Wischblatts angeordnet werden, wodurch zahlreiche Applikationen abgedeckt, unterschiedliche Federeigenschaften und Abstützmomente erzeugt werden können.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Scheibenwischer mit einer Einrichtung zum Führen eines Wischblatts in einer Seitenansicht,
- Fig. 2: eine vergrößerte Darstellung einer Einzelheit II aus Fig.1,
- Fig. 3: ein antriebsseitiges Wischblattende mit einer Variante einer Wischblattführung,
- Fig. 4: einen vergrößerten Querschnitt entsprechend einer Linie IV-IV in Fig. 3,
- Fig. 5-6: Varianten zu Fig. 4,
- Fig. 7-8: Varianten zu Fig. 3 und
- Fig. 9: eine Variante zu Fig. 3 in einer Draufsicht.

### Beschreibung der Ausführungsbeispiele

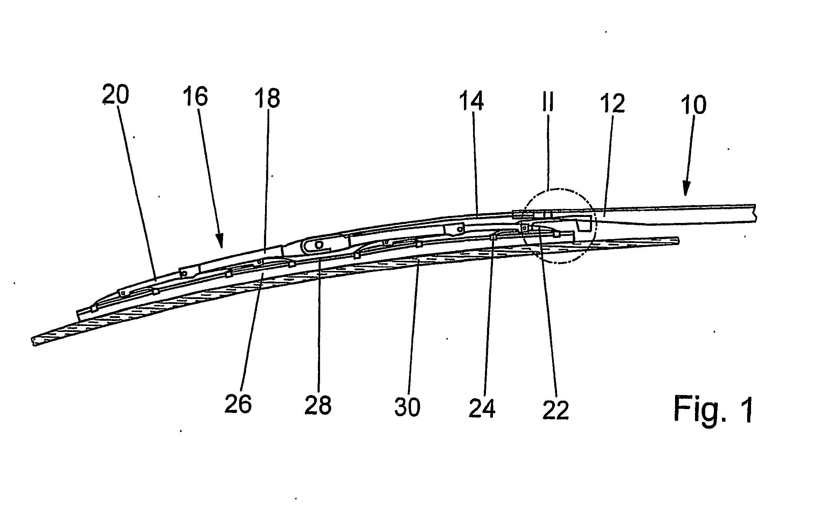

Von einem Wischarm 10 ist ein Gelenkteil 12 mit einer Wischstange 14 gezeigt (Fig. 1). Das hakenförmigen Ende der Wischstange 14 hält ein Wischblatt 16, das aus einem Tragbügelsystem mit einem Mittelbügel 18 und gelenkig mit diesem verbundenen Zwischenbügeln 20 sowie Krallenbügeln 22 aufgebaut ist. Die Krallen 24 des Krallenbügels 22 halten eine Wischleiste 26 an deren Kopfleiste 28. Die gelenkige Verbindung zwischen der Wischstange 14 und dem Wischblatt 16 und das Tragbügelsystem ermöglichen es, dass sich die Wischleiste 26 der Wölbung einer Fahrzeugscheibe 30 anpassen kann.

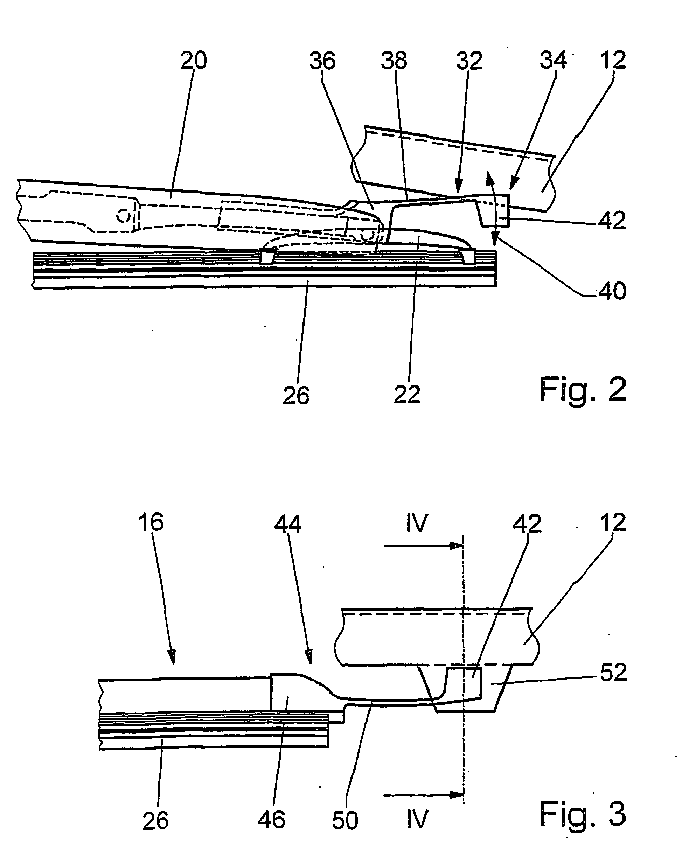

An der Anlenkstelle eines antriebsseitigen Krallenbügels 22 ist eine Einrichtung 32 zum Führen des Wischblatts 16 angeordnet (Fig. 2). Sie weist mehrere Teile auf. Ein so genannter zweiter Teil 36 ist fest mit dem Wischblatt 16 verbunden, indem es an ein als Lagerteil ausgebildetes Endstück aus Kunststoff angeformt ist. Ein Lenker 38 in Form einer Blattfeder verbindet diesen Teil 36 der Einrichtung 32 mit einem ersten Teil 34, der in Verlängerung des Wischblatts 16 und in Richtung Gelenkteil 12 weisend angeordnet ist. Der erste Teil 34 besitzt Führungsflächen 42, die seitlich am Gelenkteil 12 anliegen und das Wischblatt 16 während der Wischbewegung führen. Durch die federnde Verbindung 38 zwischen den beiden Teilen 34 und 36 der Einrichtung 32 ist der erste Teil 34 in der Lage, in Hubrichtung 40 der Bewegung des Gelenkteils 12 zu folgen, ohne den Kontakt zu verlieren. Er gleicht eine Höhenveränderung zwischen dem Wischblatt 16 und dem Gelenkteil 12 aus und die Führungsflächen 42 liegen ständig am Gelenkteil 12 an, ohne dass diese lang zu sein brauchen.

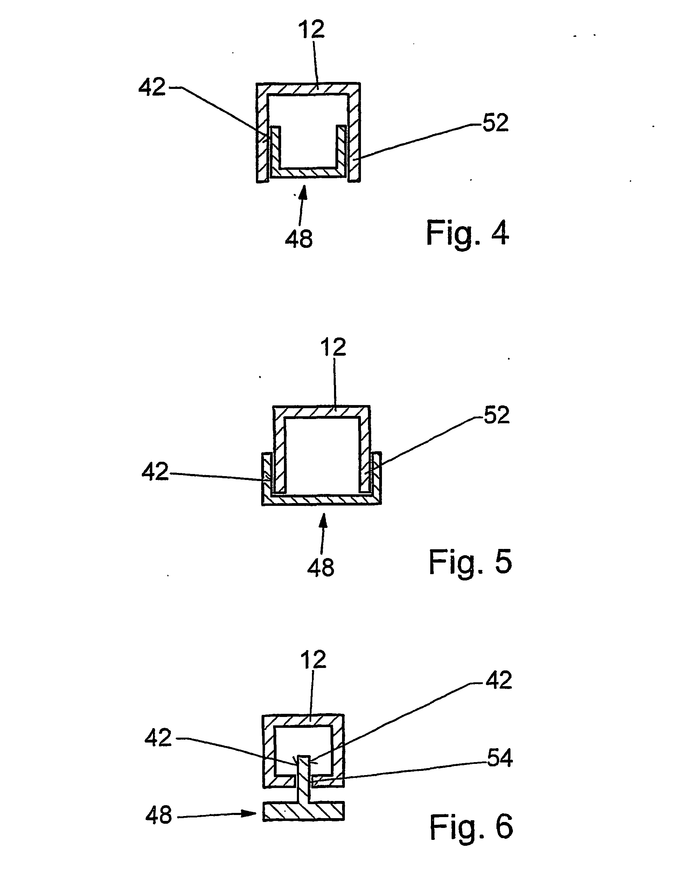

Eine Einrichtung 44 zum Führen eines sehr flach bauenden Wischblatts 16 ist in Fig. 3 dargestellt. Hier ist eine Kappe 46 am Ende auf die Wischleiste 26 gesetzt. In Verlängerung der Wischleiste 26 ist an der Kappe 46 eine Blattfeder 50 angeformt, welche die Kappe 46 mit einem ersten Teil 48 der Wischblattführung 44 verbindet. Das Gelenkteil 12 weist in dieser Ausgestaltung der Erfindung im Bereich der Führungsflächen 42 des ersten Teils 48 Vorsprünge 52 in Hubrichtung 40 auf. Die Vorsprünge 52 überlappen die Führungsflächen 42 des ersten Teils 48 außen (Fig. 4). Als Variante können die Vorsprünge 52 die Führungsflächen 42 des ersten Teils 48 auch innen überlappen (Fig. 5). Bei der Ausführung nach Fig. 6 weist der erste Teil 48 der Einrichtung 44 Führungsflächen 42 auf, die in ein Profil 54, z.B. einen Schlitz, des Gelenkteils 12 eingreifen.

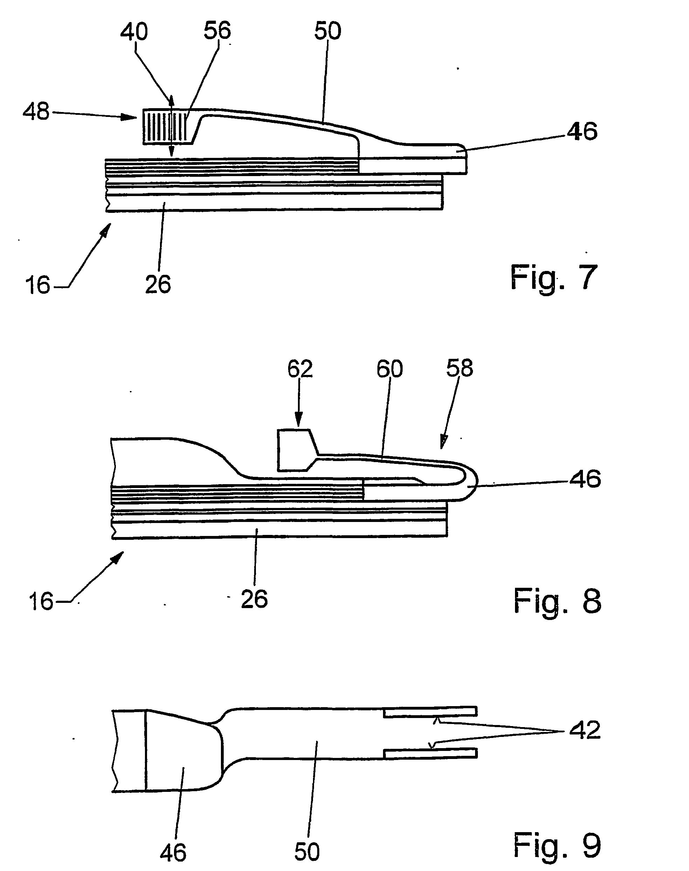

Bei Bedarf, z. B. bei eingeschränkten Platzverhältnissen, kann die Blattfeder 50 auch oberhalb des Wischblatts 16 angeordnet sein (Fig. 7). Außerdem weisen die Führungsflächen 42 des ersten Teils 48 in Hubrichtung 40 verlaufende Rippen 56 auf, welche die Kontaktfläche verkleinern. Fig. 8 zeigt eine weitere Variante der Erfindung. Auch an der Einrichtung 58 ist die Blattfeder 60 oberhalb des Wischblatts 16 angeordnet. Um genügend Freiraum für den federnden ersten Teil 62 der Einrichtung 58 zu schaffen, ist das Wischblatt 16 in diesem Bereich entsprechend ausgeformt. Bei der Ausführung nach Fig. 9 ist der zweite Teil 46 der Einrichtung 44 seitlich versetzt zum ersten Teil 48 angeordnet, so dass die Blattfeder 50 seitlich des Wischblatts 16 bzw. der Wischleiste 26 liegt.

### Bezugszeichen

- 10: Wischarm
- 12: Gelenkteil
- 14: Wischstange
- 16: Wischblatt
- 18: Mittelbügel
- 20: Zwischenbügel
- 22: Krallenbügel
- 24: Krallen
- 26: Wischleiste
- 28: Kopfleiste
- 30: Fahrzeugscheibe
- 32: Einrichtung
- 34: erster Teil
- 36: zweiter Teil
- 38: Lenker, Blattfeder
- 40: Hubrichtung
- 42: Führungsfläche
- 44: Einrichtung
- 46: Kappe
- 48: erster Teil
- 50: Lenker, Blattfeder
- 52: Vorsprung
- 54: Profil, Schlitz
- 56: Rippe
- 58: Einrichtung
- 60: Lenker, Blattfeder
- 62: erster Teil

## Patentansprüche

1. Einrichtung (32, 44, 58) zum seitlichen Führen eines Wischblatts (16) gegenüber einem Wischarm (10), das eine Wischleiste (26) umfasst und mit einem Ende eines Wischarms (10) gelenkig verbunden ist, wobei ein erster, dem Wischarm (10) zugeordneter Teil (34, 48, 62) der Einrichtung (32, 44, 58) über einen etwa senkrecht zu einer Fahrzeugscheibe (30) federnden Lenker (50, 60) mit einem zweiten dem Wischblatt (16) zugeordneten Teil (46) verbunden ist, **dadurch gekennzeichnet, dass** der zweite Teil (46) mit dem Wischblatt (16) fest verbunden ist, indem er an einer Kappe (46) der Wischleiste (26) angeformt ist und der federnde Lenker (50, 60) oberhalb, seitlich oder in der Verlängerung des Wischblatts (16) verläuft.

2. Einrichtung (32, 44, 58) nach Anspruch 1, **dadurch gekennzeichnet, dass** ihr erster Teil (34, 48, 62) mit dem Wischarm (10) fest verbunden ist.

3. Einrichtung (32, 44, 58) nach Anspruch 1, **dadurch gekennzeichnet, dass** der erste Teil (34, 48, 62) Führungsflächen (42) aufweist, die seitlich am Wischarm (10) anliegen oder in ein Führungsprofil (54) des Wischarms (10) eingreifen.

4. Einrichtung (32, 44, 58) nach Anspruch 3, **dadurch gekennzeichnet, dass** die Führungsflächen (42) in Hubrichtung (40) verlaufende Rippen (56) aufweisen.

5. Einrichtung (32, 44, 58) nach einem der Ansprüche 3 oder 4, **dadurch gekennzeichnet, dass** der Lenker (50, 60) als Blattfeder ausgebildet ist, die an dem der Fahrzeugscheibe (30) zugewandten Ende der Führungsflächen (42) angeordnet ist.

## Claims

1. Device (32, 44, 58) for the lateral guidance of a wiper blade (16) in relation to a wiper arm (10), which wiper blade comprises a wiper strip (26) and is connected in an articulated manner to one end of a wiper arm (10), a first part (34, 48, 62) of the device (32, 44, 58), which part is assigned to the wiper arm (10), being connected via a link (50, 60) which is spring-mounted approximately perpendicularly with respect to a vehicle window (10), to a second part (46) assigned to the wiper blade (16), **characterized in that** the second part (46) is connected fixedly to the wiper blade (16) by being integrally formed on a cap (46) of the wiper strip (26), and the spring-mounted link (50, 60) runs above, at the side or as an extension of the wiper blade (16).

2. Device (32, 44, 58) according to Claim 1, **characterized in that** its first part (34, 48, 62) is connected fixedly to the wiper arm (10).

3. Device (32, 44, 58) according to Claim 1, **characterized in that** the first part (34, 48, 62) has guide surfaces (42) which bear laterally against the wiper arm (10) or engage in a guide profile (54) of the wiper arm (10).

4. Device (32, 44, 58) according to Claim 3, **characterized in that** the guide surfaces (42) have ribs (56) running in the lifting direction (40).

5. Device (32, 44, 58) according to either of Claims 3 and 4, **characterized in that** the link (50, 60) is designed as a leaf spring which is arranged at that end of the guide surfaces (42) which faces the vehicle window (30).

## Revendications

1. Installation (32, 44, 58) pour guider latéralement par rapport à un bras d'essuie-glace (10), un balai d'essuie-glace (16) comprenant une lame d'essuie-glace (26) et relié de manière articulée à une extrémité d'un bras d'essuie-glace (10),
une première partie (34, 48, 62) de l'installation (32, 44, 58) associée au bras d'essuie-glace (10) étant reliée par une biellette (50, 60), élastique, sensiblement perpendiculaire à la vitre (30) du véhicule, à une seconde partie (46) associée au balai d'essuie-glace (16),
**caractérisée en ce que**
la seconde partie (46) est solidaire du balai d'essuie-glace (16) en étant formée sur un capuchon (46) de la lame d'essuie-glace (26), et le bras élastique (50, 60) passe au-dessus, latéralement ou dans le prolongement du balai d'essuie-glace (16).

2. Installation (32, 44, 58) selon la revendication 1,
**caractérisée en ce que**
sa première partie (34, 48, 62) est solidaire du bras d'essuie-glace (10).

3. Installation (32, 44, 58) selon la revendication 1,
**caractérisée en ce que**
la première partie (34, 48, 62) comporte des surfaces de guidage (42) s'appliquant latéralement contre le bras d'essuie-glace (10) ou pénétrant dans un profil de guidage (54) du bras d'essuie-glace (10).

4. Installation (32, 44, 58) selon la revendication 3,
**caractérisée en ce que**
les surfaces de guidage (42) comportent des nervures (56) dirigées dans la direction de relevage (40).

5. Installation (32, 44, 58) selon l'une quelconque des revendications 3 ou 4,
**caractérisée en ce que**
les biellettes (50, 60) sont réalisées en forme de ressort lame prévu à l'extrémité des surfaces de guidage (42) tournées vers la vitre (30) du véhicule.
